# EUROPEAN PATENT APPLICATION

(11) **EP 3 815 773 A1**
(43) Date of publication of application: **05.05.2021**
(21) Application number: 19827272.6
(22) Date of filing: 20.06.2019
(51) Int. Cl.: B01D 71/68, B01D 69/08, B01D 71/44, H01M 8/04, H01M 8/04119, H01M 8/04291, H01M 8/10

(54) **METHOD FOR PRODUCING POROUS HOLLOW FIBER MEMBRANE FOR HUMIDIFICATION**

(30) Priority: 26.06.2018 JP 2018120695
(71) Applicant: NOK Corporation, Minato-ku Tokyo 105-8585 (JP)
(72) Inventor: TAKAGI Takayuki, Kikugawa-shi, Shizuoka 437-1507 (JP); EMOTO Tsuyoshi, Kikugawa-shi, Shizuoka 437-1507 (JP)
(74) Representative: Gerauer, Marc Philippé
(86) International application number: PCT/JP2019/024474
(87) International publication number: WO 2020/004212

(57) **Abstract**

A method for producing a porous hollow fiber membrane for humidification, the method comprising dry-wet spinning a spinning dope comprising a water-soluble organic solvent solution composed of polyphenylsulfone resin and hydrophilic polyvinylpyrrolidone using water as a core liquid; then performing a crosslinking treatment at 120 to 220°C for 1 to 20 hours; and then dipping the resultant in an acidic solution with a concentration of 5 to 500 ppm. The obtained porous hollow fiber membrane has improved hydrophilicity without impairing the wettability of the porous hollow fiber membrane. Since, humidification performance of the porous hollow fiber membrane alone can be improved, it is effective as a humidifying membrane for fuel cells.

## Description

### TECHNICAL FIELD

The present invention relates to a method for producing a porous hollow fiber membrane for humidification. More particularly, the present invention relates to a method for producing a porous hollow fiber membrane for humidification used in a humidifying membrane module for fuel cells.

### BACKGROUND ART

Dehumidifying and humidifying methods using porous hollow fiber membranes are widely performed, and the methods using porous hollow fiber membranes are not only maintenance-free, but also are highly advantageous in that, for example, no power source is required for driving.

Several types of membranes are currently on the market as membranes that selectively permeate water vapor; however, their raw materials and permeation principles are different. Porous membranes that use polyimide resin as a raw material and are used to perform dehumidification and humidification by a dissolution diffusion method have excellent heat resistance and strength, but have a drawback that their water vapor permeability coefficient is low. In addition, membranes that use a fluorine-based ion exchange membrane as a raw material and are based on the principle of ion hydration have a high water vapor permeability coefficient, but have drawbacks that their heat resistance is not sufficient, and that the membranes themselves are very expensive.

On the other hand, porous membranes that use polyetherimide resin as a raw material and are used to perform dehumidification and humidification by a capillary condensation method satisfy both water vapor permeability and heat resistance, and are used in many industrial fields. However, since the absolute strength of the membranes is weak and the flexibility is particularly poor, there is a problem that the porous hollow fiber membranes are broken when dehumidifying and humidifying a large amount of gas.

Such porous hollow fiber membranes have recently been used for humidifying a separating membrane in fuel cell stack. However, in the case of fuel cells, a large amount (i.e., about 4000 NL/min) of air humidification is required for in-vehicle use, and hot water is often used as a drive source for humidification for stationary use. In any case, it is particularly necessary to impart durability and heat resistance to the porous hollow fiber membranes.

Actually, in the case of solid polymer fuel cells, the actual operation is under the atmospheric conditions in a water vapor saturated state at a temperature of about 60 to 80°C. Polyetherimide resin is excellent in heat resistance and is not easily hydrolyzed; however, it has been pointed out that its elongation and flexibility decrease remarkably under wet heating conditions, which has caused breakage of the porous hollow fiber membranes.

Further, polysulfone resin raw materials are commonly used as ultrafiltration membranes for water filtration, precision filtration membranes, and the like, and are known to have excellent strength stability under wet humid conditions; however, it tends to be difficult to obtain an appropriate pore size due to the application of capillary condensation method. In some cases, there are problems, such as water seeping out to the gas side.

The present applicant has already proposed a method for obtaining a porous polyphenylsulfone resin hollow fiber membrane by dry-wet spinning a spinning dope comprising a water-soluble organic solvent solution composed of polyphenylsulfone resin and hydrophilic polyvinylpyrrolidone using an N-methyl-2-pyrrolidone aqueous solution as a core liquid (Patent Document 1). However, it is described that the porous hollow fiber membrane obtained by this method is preferably used for ultrafiltration membranes for oil/water separation, etc., and is not intended for water vapor permeation.

As a method for producing a water vapor permeable membrane having excellent gas permeability, not causing a water leak toward a gas side, also excellent in strength stability and effectively usable as a humidifying membrane for a fuel cell, the present applicant has also proposed a method of dry-wet spinning a spinning dope comprising a water-soluble organic solvent solution composed of polyphenylsulfone resin and hydrophilic polyvinylpyrrolidone [PVP] using water as a core liquid (Patent Document 2).

Here, in humidifying membrane modules for fuel cells, it is required to improve the performance of the porous hollow fiber membrane alone to save space and reduce cost. In order to improve the performance, a method to improve wettability by an acid treatment is known. However, in the porous hollow fiber membrane for humidification, even if the wettability of the hollow fiber membrane base material was improved by an acid treatment, hydrophilizing substances such as PVP were eluted. As a result, there was a problem that the humidification performance of the porous hollow fiber membrane alone was reduced.

### PRIOR ART DOCUMENT

### PATENT DOCUMENT

Patent Document 1 : JP-A-2001-219043
Patent Document 2 : JP-A-2004-290751

### OUTLINE OF THE INVENTION

### PROBLEM TO BE SOLVED BY THE INVENTION

An object of the present invention is to provide a method for producing a porous hollow fiber membrane that can improve hydrophilicity without impairing the wettability of the porous hollow fiber membrane, whereby the porous hollow fiber membrane alone has higher humidification performance.

### MEANS FOR SOLVING THE PROBLEM

The above object of the present invention can be achieved by dry-wet spinning a spinning dope comprising a water-soluble organic solvent solution composed of polyphenylsulfone resin and hydrophilic polyvinylpyrrolidone using water as a core liquid, then performing a crosslinking treatment at 120 to 220°C for 1 to 20 hours, and then dipping the resultant in an acidic solution with a concentration of 5 to 500 ppm, thereby producing a porous hollow fiber membrane for humidification.

### EFFECT OF THE INVENTION

The porous hollow fiber membrane for humidification according to the present invention has an excellent effect that performing the acid treatment after polyvinylpyrrolidone is crosslinked by heating makes it possible to suppress the elution of hydrophilizing substances due to the acid treatment. Therefore, it is possible to exhibit a good balance of performance of improving the wettability of the hollow fiber membrane by the acid treatment, while suppressing the reduction of hydrophilicity due to the elution of hydrophilizing substances from the porous hollow fiber membrane.

### BRIEF DESCRIPTION OF DRAWING

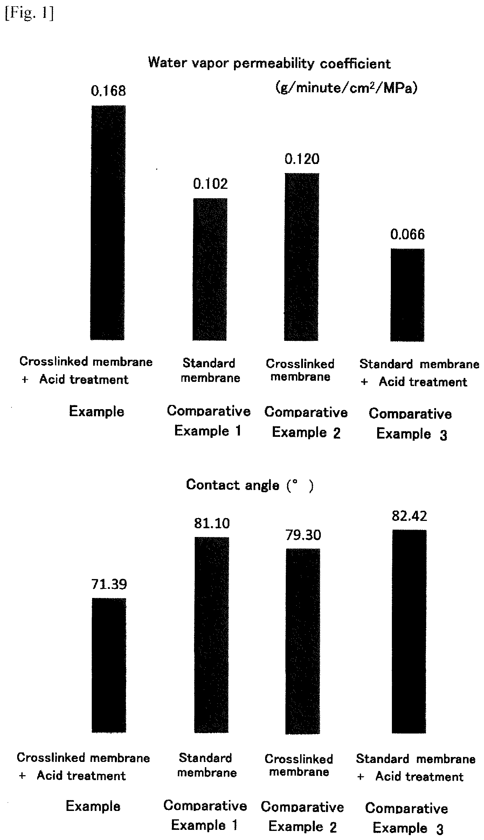

Fig. 1: Graphs comparing the water vapor permeability coefficient and contact angle measured for hollow fiber membranes obtained in the Example and Comparative Examples

### EMBODIMENTS FOR CARRYING OUT THE INVENTION

The polyphenylsulfone resin has a repeating unit represented as follows: 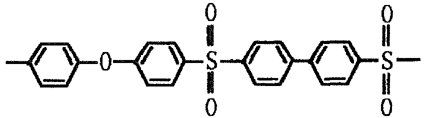 i.e., it has a biphenylene group and no isopropylidene group. In practice, commercial products, such as the RADEL R series produced by Amoco, can be used as they are.

To a spinning dope comprising polyphenylsulfone resin as a film-forming component, hydrophilic polyvinylpyrrolidone and a water-soluble organic solvent are added to form a spinning dope. As the water-soluble organic solvent, an aprotic polar solvent, such as dimethylformamide, dimethylacetamide, or N-methyl-2-pyrrolidone, is used. The polyphenylsulfone resin is used at a concentration of about 10 to 40 wt.%, preferably about 15 to 30 wt.%, in the spinning dope. A porous hollow fiber membrane having a desired pore size and membrane strength cannot be obtained outside this concentration range.

As the polyvinylpyrrolidone added as a hydrophilic highmolecular substance, one having a molecular weight of about 1000 (K-15) to 1200000 (K-90), preferably about 10000 (K-30) to 1200000 (K-90), is used at a ratio of about 50 to 150 parts by weight, preferably about 50 to 100 parts by weight, based on 100 parts by weight of the polyphenylsulfone resin. The addition of polyvinylpyrrolidone at such a ratio more or less affects structure control, such as the surface pore size of the porous membrane; however, more than that, it achieves an effect of reducing the air permeability rate of the porous membrane, i.e., improving gas barrier properties, and improving the water vapor permeability rate.

Dry-wet spinning using such a spinning dope is carried out using water as a core liquid. The porous hollow fiber membrane coagulated in water or an aqueous coagulation solution is washed with water, and washed with hot water in an autoclave at 121°C for about 30 to 90 minutes, followed by a crosslinking treatment. The crosslinking treatment of polyvinylpyrrolidone is carried out at about 120 to 220°C, preferably about 150 to 190°C, more preferably about 175 to 190°C, for about 1 to 20 hours, preferably about 5 to 12 hours.

If the crosslinking treatment is not carried out, the elution of hydrophilizing substances cannot be suppressed even when the acid treatment is performed, and it is difficult to ensure wettability, as shown in the decrease of the water vapor permeability coefficient shown in Comparative Example 3, provided later.

The crosslinked porous hollow fiber membrane is further subjected to the acid treatment by dipping it in an acidic solution with a concentration of about 5 to 500 ppm, preferably about 50 to 300 ppm.

For the acid treatment, sulfuric acid; hydrohalogenic acids, such as hydrochloric acid, hydrobromic acid, and hydroiodic acid; halogen oxo acids, such as hypochlorous acid; sulfonic acids, such as fluorosulfonic acid and methanesulfonic acid; nitric acid; phosphoric acid; boric acid; hexafluoroantimonic acid; tetrafluoroboric acid; hexafluorophosphoric acid; carboxylic acids, such as acetic acid; ascorbic acid; and the like are used.

The acid treatment is followed by a drying treatment, thereby producing a porous hollow fiber membrane. The acid treatment is carried out at about 60 to 110°C, preferably about 70 to 100°C, for about 24 to 150 hours. After the acid treatment, a drying treatment is carried out at about 40 to 60°C for about 12 to 48 hours.

When the acid treatment is carried out, the wettability of the porous hollow fiber membrane is significantly improved, as shown in the comparison results of the Example and Comparative Example 2. However, if the concentration of the acid used in the acid treatment is higher than the above range, the physical properties of the porous hollow fiber membrane are reduced, which is not preferable.

### EXAMPLES

The following describes the present invention with reference to Examples.

### Example

20 parts by weight of polyphenylsulfone resin (RADEL R-5000, produced by Solvay Specialty Polymers) and 15 parts by weight of polyvinylpyrrolidone (Kollidon 30, produced by BASF) were dissolved in 65 parts by weight of dimethylformamide to prepare a membrane-forming dope. Next, water was discharged as a core liquid to the inside nozzle of a double annular spinning nozzle, and the membrane-forming dope was discharged from the outside of the double annular spinning nozzle using a gear pump. After the discharged membrane-forming dope was coagulated in a water coagulation liquid, and then taken up on a hollow fiber membrane bobbin using a winder. After the hollow fiber membrane was taken up, the hollow fiber membrane was subjected to an autoclave treatment at 121°C for 60 minutes.

The hollow fiber membrane after the autoclave treatment was placed in a thermostatic chamber and heated at 175°C for 9 hours to crosslink the polyvinylpyrrolidone. Then, the porous hollow fiber membrane after the crosslinking treatment was dipped in a sulfuric acid aqueous solution with a concentration of 300 ppm, and an acid treatment was carried out at 80°C for 150 hours. After completion of the dipping, the porous hollow fiber membrane was placed in a thermostatic chamber and dried at 55°C for 24 hours.

The obtained porous hollow fiber membrane was used to perform a water vapor permeability test and to measure the water contact angle of the hollow fiber membrane. As a result, the water vapor permeability coefficient was 0.168 g/min/cm²/MPa and the contact angle was 71.39°.

### Comparative Example 1

When neither the crosslinking treatment nor the acid treatment was carried out in the Example, the obtained porous hollow fiber membrane had a water vapor permeability coefficient of 0.102 g/min/cm²/MPa and a contact angle of 81.10°.

### Comparative Example 2

When the acid treatment was not carried out in the Example, the obtained porous hollow fiber membrane had a water vapor permeability coefficient of 0.120 g/min/cm²/MPa and a contact angle of 79.30°.

### Comparative Example 3

When the crosslinking treatment was not carried out in the Example, the obtained porous hollow fiber membrane had a water vapor permeability coefficient of 0.066 g/min/cm²/MPa and a contact angle of 82.42°.

### INDUSTRIAL APPLICABILITY

The porous hollow fiber membrane obtained by the production method according to the present invention has improved hydrophilicity without impairing the wettability of the porous hollow fiber membrane. Therefore, the porous hollow fiber membrane alone has high humidification performance, and is thus effectively used as a porous hollow fiber membrane used in a humidifying membrane module for fuel cells.

## Claims

1. A method for producing a porous hollow fiber membrane for humidification, the method comprising dry-wet spinning a spinning dope comprising a water-soluble organic solvent solution composed of polyphenylsulfone resin and hydrophilic polyvinylpyrrolidone using water as a core liquid; then performing a crosslinking treatment at 120 to 220°C for 1 to 20 hours; and then dipping the resultant in an acidic solution with a concentration of 5 to 500 ppm.

2. The method for producing a porous hollow fiber membrane for humidification according to claim 1, wherein hydrophilic polyvinylpyrrolidone is used at a ratio of 50 to 150 parts by weight, based on 100 parts by weight of the polyphenylsulfone resin.

3. The method for producing a porous hollow fiber membrane for humidification according to claim 1, wherein an autoclave treatment is performed prior to the crosslinking treatment.

4. The method for producing a porous hollow fiber membrane for humidification according to claims 1, 2 or 3, which is used as a humidifying membrane for fuel cells.

## Amended claims

### Amended claims under Art. 19.1 PCT

1. (Amended) A method for producing a porous hollow fiber membrane for humidification, the method comprising dry-wet spinning a spinning dope comprising a water-soluble organic solvent solution composed of polyphenylsulfone resin and hydrophilic polyvinylpyrrolidone using water as a core liquid; then performing a crosslinking treatment at 120 to 220°C for 1 to 20 hours; and then dipping the resultant in an acidic solution containing an acid at a concentration of 5 to 500 ppm.

2. The method for producing a porous hollow fiber membrane for humidification according to claim 1, wherein hydrophilic polyvinylpyrrolidone is used at a ratio of 50 to 150 parts by weight, based on 100 parts by weight of the polyphenylsulfone resin.

3. The method for producing a porous hollow fiber membrane for humidification according to claim 1, wherein an autoclave treatment is performed prior to the crosslinking treatment.

4. The method for producing a porous hollow fiber membrane for humidification according to claims 1, 2 or 3, which is used as a humidifying membrane for fuel cells.

Statement under Art. 19.1 PCT
The novelty and inventive step of claims 1 to 4 were acknowledged; however, it was indicated that the phrase "an acidic solution with a concentration of 5 to 500 ppm" in claim 1 is not clear as to what the concentration is.

Accordingly, in order to overcome the above indication, this phrase was amended to "an acidic solution containing an acid at a concentration of 5 to 500 ppm" based on the descriptions of paragraphs [0021], [0022], [0027], etc., of the present specification.
